# EUROPÄISCHE PATENTSCHRIFT

(11) **EP 0 684 725 B1**
(45) Veröffentlichungstag und Bekanntmachung des Hinweises auf die Patenterteilung: **21.08.2002**
(21) Anmeldenummer: 95107479.8
(22) Anmeldetag: 16.05.1995
(51) Int. Cl.: H04M 3/22, H04Q 3/00, H04Q 3/545

(54) **Modular strukturierter Service-Personalkomputer**
Modular structured service personal computer
Ordinateur personnel de service à structure modulaire

(30) Priorität: 25.05.1994 DE 4418231
(43) Veröffentlichungstag der Anmeldung: 29.11.1995
(73) Patentinhaber: SIEMENS AKTIENGESELLSCHAFT, 80333 München (DE)
(72) Erfinder: Pfeiffer, Andreas, Dipl. Math, D-12207 Berlin (DE); Renner, Frank, Dipl. Ing., D-10587 Berlin (DE); Kaufel, Wolfgang, Dipl. Math., D-14167 Berlin (DE); Kreutzer, Michael, D-10969 Berlin (DE); Vogt-Wingerath, Christine, Dipl. Math., D-14057 Berlin (DE); Weiser, Manfred, Dipl. Ing., D-13465 Berlin (DE)

(56) Entgegenhaltungen:
- GB-A- 2 206 713
- US-A- 4 782 506
- ARVIDSON ET AL: "A generic operations system interface to support the next generation of digital loop carrier systems" IEEE JOURNAL ON SELECTED AREAS IN COMMUNICATIONS, Bd. 6, Nr. 4, Mai 1988 (1988-05), Seiten 677-684 684, XP002098960 ISSN: 0733-8716
- STICKER ET AL: "Network monitioring and analysis (NMA) - an advanced network monitoring tool" IEEE JOURNAL ON SELECTED AREAS IN COMMUNICATIONS, Bd. 3, Nr. 3, 1. Dezember 1986 (1986-12-01), Seiten 1290-1294 1294, XP002098961 ISSN: 0733-8716
- COHEN R S ET AL: "UNIFIED NETWORK MANAGEMENT FROM AT&T" AT & T TECHNICAL JOURNAL, Bd. 67, Nr. 6, 1. November 1988 (1988-11-01), Seiten 121-136, XP000052893 ISSN: 8756-2324
- SAMEH RABIE: "INTELLIGENT TOOLS FOR NETWORK MANAGEMENT" INNOVATIONS IN SWITCHING TECHNOLOGY, STOCKHOLM, MAY 28 - JUNE 1, 1990, Bd. 4, Nr. SYMP. 13, 28. Mai 1990 (1990-05-28), Seiten 131-137, XP000130975 INSTITUTE OF ELECTRICAL AND ELECTRONICS ENGINEERS

## Beschreibung

Digitale Kommunikationssysteme, insbesondere digitale Vermittlunganlagen, dienen zur Verbindung von Kommunikationsendgeräten mit vielfältigen Leistungsmerkmalen untereinander und zur Verbindung dieser Endgeräte mit privaten oder öffentlichen Kommunikationsnetzen. Hierfür sind die Kommunikationssysteme mit umfangreichen vermittlungs-, betriebs- und sicherheitstechnischen Programmodulen ausgestattet. Ein derartiges Kommunikationssystem ist beispielsweise aus der Druckschrift der Fa. Siemens, "ISDN im Büro, HICOM", Sonderausgabe Telcom Report und Siemens-Magazin COM (1985) bekannt. Für den Betrieb, die Wartung und das Administrieren bzw. Verwalten eines derartigen Kommunikationssystems ist ein Betriebstechnikanschluß vorgesehen, an den ein Betriebsterminal angeschlossen wird. Ein Betriebsterminal umfaßt beispielsweise eine Bildschirmeinrichtung mit einer alphanumerischen Tastatur und einen Drucker sowie eine CCITT-Mensch-Maschine-Sprache als Bediensprache. Für die Realisierung von komfortablen Bedieneroberflächen für Betriebstechnikterminals, beispielsweise mit Masken- und Fenstertechnik, sind vorzugsweise Personalcomputer vorgesehen.

Das bekannte Kommunikationssystem wird mit Hilfe von betriebstechnischen Anweisungen betrieben, administriert und gewartet. Die im Betriebstechnikterminal gebildeten oder gespeicherten betriebstechnischen Anweisungen gelangen über den Betriebstechnikanschluß an das Kommunikationssystem. In diesem werden die betriebstechnischen Anweisungen bearbeitet, d.h. die angezeigten betriebstechnischen Aufträge ausgeführt. Zur Durchführung bedieneraufgabenbezogener Prozeduren, wie z.B. Einrichten eines Teilnehmeranschlusses, werden die hierfür erforderlichen betriebstechnischen Anweisungen zu einem Stapel zusammengefaßt und im Betriebstechnikterminal gespeichert. In die betriebstechnischen Anweisungen sind durch bedieneroberflächengesteuerte Eingaben am Betriebsterminal - z.B. durch eine Tastatur - betriebstechnische Parameter einfügbar, mit deren Hilfe ein gezieltes Verwalten, Betreiben und Administrieren eines Kommunikationssystems möglich ist. Durch derartige betriebstechnische Anweisungen sind neben dem eingangs beschriebenen ISDN-Kommunikationssystem weitere Kommunikationssysteme HICOM der Fa. Siemens zu administrieren, betreiben und zu verwalten. Für die einzelnen Kommunikationssysteme sind hierbei insbesondere unterschiedliche betriebstechnische Anweisungen bzw. Parameter und unterschiedliche bedieneraufgabenbezogene Stapel von betriebstechnischen Anweisungen, sowie deren Auswirkungen in den jeweiligen Kommunikationssysteme zu berücksichtigen. Folglich wurde für jedes der Kommunikationssysteme ein speziell ausgeprägtes Betriebstechnikterminal realisiert. Dies bedeutet, daß für das Warten und Konfigurieren bzw. Administrieren unterschiedlicher Kommunikationssysteme unterschiedliche Betriebstechnikterminals ausgestaltet sind. Diese unterschiedliche Ausgestaltung von Betriebstechnikterminals trifft auch für das Fernadministrieren und Fernwarten von Kommunikationssystemen zu, wobei für den Anschluß an öffentiche oder private Kommunikationsnetze an den Kommunikationssystemen unterschiedlichste Betriebstechnikschnittstellen ausgebildet sind.

In der amerikanischen Patentschrift US-A-4 782 506 wird eine Steuerungseinheit offenbart, die zwischen einem Betriebstechnikterminal und einem Kommunikationssystem zwischengeschaltet, eine Anpassung an verschiedene Befehlsstrukturen und -konventionen unterschiedlicher Telekommunikationssysteme vornimmt.

Die Anpassung wird durch einen Übersetzer vorgenommen, der Befehlseingaben in der Bedieneinheit dem Kommunikationssystem in einem - für dieses Kommunikationssystem definierten - gültigen Format präsentiert und umgekehrt Reaktionen des Kommunikationssystems in das Format des Betriebstechnikterminals übersetzt. Wenngleich eine derartige, betriebstechnikterminal-extern angeordnete Steuereinheit eine Anpassung an unterschiedliche Kommunikationssysteme zu leisten vermag, ist der Einsatz eines weiteren Geräts seinerseits verbunden mit einem Aufwand an Administration und Wartung.

Die der Erfindung zugrunde liegende Aufgabe besteht darin, einen Personalcomputer mit lokalen und Fernwarten sowie Fernadministrieren unterschiedlicher Kommunikationssysteme auszugestalten. Die Aufgabe wird durch die Merkmale des Anspruchs 1 gelöst.

Der wesentliche Aspekt des erfindungsgemäßen Service-Personalcomputers ist in der Programmstrukturierung und in Ausgestaltung der einzelen Programmstrukturen zu sehen, durch die eine erhebliche Steigerung der Modularität bei der Programmkonfiguration und der Portabilität des Service-Personalcomputers für unterschiedlich zu administrierende und zu verwaltende Kommunikationssysteme erreicht wird. Dies bedeutet, daß bei einem späteren Hinzutreten neuer Kommunikationssysteme oder neuer Ausbauvarianten derartiger Kommunikationssysteme oder das Auftreten neuer Kommunikationsdienste sowohl das Administrieren als auch das Warten der Kommunikationssysteme durch Hinzufügen neuer Programmodule, insbesondere von Geräteprogrammodulen und Applikations-Programmodulen beherrscht werden kann. Der erfindungsgemäße Service-Personalcomputer bietet somit in allen Aspekten eine ausgeprägte Anpassungsfähigkeit an unterschiedliche Kommunikationssysteme mit unterschiedlichster Ausgestaltung ohne objektive Beeinflussung der im Service-Personalcomputer realisierten Programmstrukturen bzw. der dieser Systemstruktur zugrundeliegenden Systemkonzeption. Die Modularität bzw. Portabilität des Service-Personalcomputers wird im wesentlichen durch eine in vier Programmstrukturen unterteilte Systemkonzeption bewirkt. Die vier Programmstrukturen stellen die Benutzer-Programmstruktur, die Visualisierungs-Programmstruktur, die Betriebstechnik-Programmstruktur und die Schaltungstechnik-Programmstruktur dar. Hierbei werden mit Hilfe des in der Betriebstechnik-Programmstruktur realisierten Anweisungs-Bearbeitungs-Programmoduls die das Bilden und Übermitteln von betriebstechnischen Anweisungen von und zu den Kommunikationssystemen betreffenden Funktionen bewirkt. Der Zugriff auf dieses Anweisungs-Bearbeitungs-Programmodul durch die Benutzer-Programmodule wird durch das Zugriffs-Programmodul gesteuert. Durch dieses Zugriffs-Programmodul erfolgt zusätzlich die Aktivierung eines der beiden Betriebssysteme in Abhängigkeit von der realisierten Einbindung des jeweiligen Benutzer-Programmoduls. Durch das Einfügen einer Visualisierungs-Programmstruktur wird eine Entkoppelung der von den Kommunikationssystemen übermittelten Fehler- und Systemnachrichten von dem betriebstechnischen Anweisungsverkehr bewirkt. Diese übermittelten Fehler- und Systemmeldungen werden im Service-Personalcomputer ohne weitere Verarbeitung visualisiert.

In die Benutzer-Programmstruktur und die Schaltungstechnik-Programmstruktur sind mit geringfügigem zusätzlichem Aufwand Benutzer-Programmodule oder Schaltungstechnik-Programmodule einfüg- oder entfernbar. Diese Modifikationen sind dem Zugriffs-Programmodul durch entsprechende betriebstechnische Eingaben im Sinne einer zusätzlichen Steuerung zusätzlicher Programmodule oder des Entfernens von Programmodulen anzuzeigen.

Gemäß einer vorteilhaften Ausgestaltung des erfindungsgemäßen Service-Personalcomputers ist dieser derart ausgestaltet, daß zu kommunikationssystemindividuellen oder aufgabenbezogenen Stapeln zusammengefaßte betriebstechnische Anweisungen sukzessiv zu einem Kommunikationssystem übermittelt werden - Anspruch 2. Dies bedeutet, daß in einem dem Anweisung-Bearbeitung-Programmodul zugeordneten Massenspeicher - z.B. einer Harddisc - aufgabenbezogene Stapel von betriebstechnischen Anweisungen - beispielsweise "Einrichtung eines Teilnehmers" - gespeichert und durch das Anweisung-Bearbeitung-Programmodul selbsttätig Anweisung für Anweisung sukzessiv zu einem zu administrierenden bzw. zu verwaltenden Kommunikationssystem übermittelt werden. Bei der sukzessiven Übermittlung wird nach jedem Übermitteln einer betriebstechnischen Anweisung eine Bestätigungsmeldung vom Kommunikationssystem abgewartet und ausgewertet, wobei das Auswerteergebnis den weiteren Ablauf derart beieinflußt, daß bei nach einem Erkennen einer Ausführungsbestätigung der vorhergehend übermittelten betriebstechnischen Anweisung eine weitere, vorhandene betriebstechnische Anweisung übermittelt wird und bei einem Erkennen einer Nichtausführungsbestätigung der vorhergehend übermittelten betriebstechnischen Anweisung eine dem jeweiligen Erfordernis entsprechende Reaktion eingeleitet wird. Beispielsweise wird einem aktuellen Benutzerprogrmmodul die Nichtbestätigung angezeigt und zusammen mit diesem eine die Ausführung der betreffenden betriebstechnischen Anweisung ermöglichende weitere betriebstechnische Anweisung bebildet und an das betroffene Kommunikationssystem übermittelt. Als eine weitere Reaktion ist beispielsweise eine automatisches Bilden einer weiteren zusätzlichen betriebstechnischen Anweisung und ein Übermitteln an das betroffene Kommunikationssystem vorgesehen.

Alternativ können in den Benutzer-Programmodulen aufgabenbezogene Stapel von betriebstechnischen Anweisungen gebildet und im Sinne eines Weiterleitens an ein Kommunikationssystem an das Anweisungs-Bearbeitungs-Programmodul übergeben werden - Anspruch 3. Dies bedeutet, daß in den Benutzer-Programmodulen sowohl einzelne betriebstechnische Anweisungen als auch Stapel von betriebstechnischen Anweisungen gebildet werden können, wobei die Basis für das Bilden von Stapeln in Massenspeichern gespeicherte, vorhandene Stapel darstellen, die durch bedieneroberflächengesteuerte Eingabe von Parametern zu aktuellen Stapeln von betriebstechnischen Anweisungen zusammengestellt werden.

Besonders vorteilhaft ist in der Benutzer-Programmstruktur ein Admininstrations-Programmodul, ein Wartungs-Programmodul und ein Kommunikations-Programmodul vorgesehen - Anspruch 4. Diese Benutzer-Programmodule sind sowohl im Personalcomputer-Betriebssystem als auch in einem fensterorientierten Betriebbssystem realisierbar. Ein vorteilhaftes Personalcomputer-Betriebssystem stellt beispielsweise das Betriebssystem MS-DOS und ein vorteilhaftes fensterorientiertes Betriebssystem beispielsweise ein " MS WINDOWS"-Betriebssystem dar.

In die Benutzer-Programmstruktur ist zusätzlich ein eine Datenbasis eines Kommunikationssystems generierendes oder aktualisierendes oder Datenbasisdaten sammelndes Datenbasis-Programmodul einfügbar - Anspruch 5. Mit Hilfe dieses Datenbasis-Programmoduls kann die Datenbasis eines zu administrierenden bzw. zu verwaltenden Kommunikationssystems erstellt oder aktualisiert werden. Für das Transferieren der überwiegend umfangreichen Datenbasisdaten von dem Service-Personalcomputer zu einem Kommunikationssystem und umgekehrt ist der Service-Personalcomputer mit einer peripheren Rechnerschnittstelle ausgestattet - Anspruch 13. Für die Realisierung dieser peripheren Rechnerschnittstelle ist in der Betriebstechnik-Programmstruktur ein Rechnerschnittstellen-Programmodul - Anspruch 8 - und in der Schaltungstechnik-Programmstruktur ein Rechnerschnittstellentreiber - Anspruch 11 - vorgesehen. Die periphere Rechnerschnittstelle ist vorteilhaft durch die standardisierte SCSI-Rechnerschnittstelle (Small Computer System Interface) realisiert. Die in dem Standard ANSI (American National Standard Institute) - X3T9.2 standardisierte periphere SCSI-Rechnerschnittstelle ist insbesondere für den Anschluß von peripheren Einrichtungen - z.B. Massenspeichern - an kleinere Rechnersysteme definiert. Für die bidirektionale Übertragung von Adressen und Daten ist diese periphere Rechnerschnittstelle mit acht Daten-Schnittstellenanschlüssen und einem Datenparitybit-Schnittstellenanschluß ausgestattet. Zur Steuerung der Peripherieschnittstelle sind weitere neun Steueranschlüsse vorgesehen. Durch die Realisierung dieser peripheren Rechnerschnittstelle können umfangreiche Datenbasisinformationen bei einem lokalen Anschluß des Service-Personalcomputers an ein Kommunikationssystem beispielsweise umfangreiche Datenbasisinformationen direkt in den Massenspeicher - z.B. Harddisc - des Kommunikationssystems übertragen werden. Analog hierzu sind aus der Datenbasis eines Kommunikationssystems ein oder mehrere Dateien direkt aus dem peripheren Speicher des Kommunikationssystems abrufbar und an den Service-Personalcomputer übertragbar.

Für die Kopplung von Service-Personalcomputern beispielsweise beim abgesetzten Administrieren oder Warten eines Kommunikationssystems oder für die Kopplung eines Service-Personalcomputers mit einer Datenverarbeitungsanlage ist in der Benutzer-Programmstruktur ein externes Kommunikations-Programmodul und in der Schaltungstechnik-Programmstruktur ein synchroner Kommunikationsschnittstellentreiber vorgesehen - Anspruch 6 und Anspruch 10. Der Kommunikationsschnittstellentreiber stellt das Bindeglied zu einer synchronen Kommunikationsschnittstelle dar - Anspruch 14. Mit Hilfe dieser optional zu realisierenden synchronen Kommunikationsschnittstelle können Massendaten von oder zu einem Kommunikationssystem bzw. einer Datenverarbeitungsanlage im Sinne einer umfangreichen Datenbasisaktualisierung oder Datenbasiserstellung übertragen werden. Auch Stapel von betriebstechnischen Anweisungen sind über diese weitere synchrone Kommunikationsschnittstelle übermittelbar. Die prozedurale Steuerung dieser weiteren synchronen Kommunikationsschnittstelle wird durch das in der Benutzer-Programmstruktur realisierte externe Kommunikations-Programmodul realisiert.

Gemäß einer weiteren vorteilhaften Ausgestaltung des erfindungsgemäßen Service-Personalcomputers ist in der Benutzer-Programmstruktur ein Hilfe-Programmodul einfügbar - Anspruch 7. Mit Hilfe dieses Hilfe-Programmoduls werden einer ungeübten Serviceperson den Betrieb eines Service-Personalcomputers unterstützende bzw. erläuternde Informationen visualisiert.

Im folgenden wird der erfindungsgemäße Service-Personalcomputer anhand mehrerer Blockschaltbilder näher erläutert. Dabei zeigen
- Fig. 1: einen Service-Personalcomputer und dessen Anschlußmöglichkeiten an Kommunikationssysteme,
- Fig. 2: die Softwarestruktur des Service-Personalcomputers,
- Fig. 3: die Programmstruktur des Anweisungs-, BearbeitungsProgrammoduls,
- Fig. 4: die Programmstruktur des Zugriffs-Programmoduls und
- Fig. 5: ein Meldungsablaufdiagramm für eine Kommununkationsbeziehung zwischen einem Kommunikationssystem und einem lokal angeschlossenen Service-Personalcomputer.

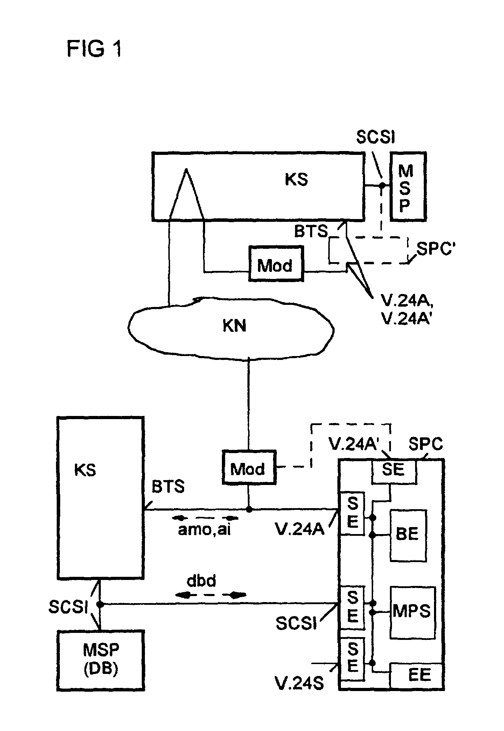

Fig. 1 zeigt einen Service-Personalcomputer SPC und dessen Anschluß an zu administrierende bzw. zu verwaltende Kommunikationssysteme KS. Die Datenbasis DB der Kommunikationssysteme KS ist in angeschlossenen Massenspeichern MSP - beispielsweise einer Harddisc - gespeichert. Für den Anschluß derartiger Massenspeicher MSP an ein Kommunikationssystem KS sind diese und die Massenspeicher MSP jeweils mit einer peripheren Rechnerschnittstelle SCSI ausgestattet und miteinander verbunden. Die periphere Rechnerschnittstelle SCSI ist vorteilhaft durch die standardisierte, periphere Rechnerschnittstelle "Small Computer System Interface" realisiert. Die "Small Computer System Interface" ist im Dokument X3T9.2 von ANSI (American National Standard Institute) definiert und weist für die bidirektionale Übertragung von Adressen und Daten acht Daten-Schnittstellenanschlüsse sowie einen Datenparitybit-Schnittstellenanschluß auf. Zur Steuerung der peripheren Rechnerschnittstelle sind weitere neun Steueranschlüsse vorgesehen. Für die Kommunikation des Service-Personalcomputers SPC mit dem Massenspeicher MSP eines Kommunikationssystems ist dieser mit einer gleichartig realisierten Rechnerschnittstelle SCSI versehen. Die Realisierung der prozeduralen und physikalischen Eigenschaften dieser Rechnerschnittstelle SCSI erfolgt in einer Rechnerschnittstelleneinheit SE. Über diese mit der Rechnerschnittstelle SCSI des Massenspeichers MSP verbundenen Rechnerschnittstelle SCSI des Service-Personalcomputers SPC sind die Datenbasen DB der Kommunikationssysteme modifizier - d.h. aktualisierbar und Datenbasisinformationen abrufbar.

In einer weiteren Schnittstelleneinheit SE ist eine Datenschnittstelle V.24A mit einem asynchronen Übertragungsverfahren realisiert. Die Datenschnittstelle V.24A ist gemäß der CCITT-Empfehlung V.24 ausgestaltet. Bei einem lokalen Anschluß des Service-Personalcomputers SPC an ein Kommunikationssystem KS ist die Datenschnittstelle V.24A mit einer gleichartigen Betriebstechnikschnittstelle BTS des Kommunikationssystems KS verbunden. Über diese Verbindung werden die betriebstechnischen Anweisungen amo bzw. Rückmeldungen ai vom Kommunikationssystem KS übertragen.

Bei einem abgesetzten Betrieb des Service-Personalcomputers SPC, d.h. der Service-Personalcomputer SPC ist über ein öffentliches oder privates Kommunikationsnetz KN mit einem Kommunikationssystem KS verbunden, ist für die Übertragung der betriebstechnischen Anweisungen amo zwischen die Betriebstechnikschnittstelle BTS bzw. die Datenschnittstelle V.24A und dem Kommunikationsnetz KN jeweils ein Modem MOD eingefügt. Mit Hilfe dieser Modems MOD werden die digitalen Informationen in für die Übertragung über das jeweilige Kommunikationsnetz KN geeignete analoge oder digitale Signale umgesetzt. Die Verbindung Service-Personalcomputer SPC - abgesetztes Kommunikationssystem KS ist im abgesetzten Kommunikationssystem KS über nicht dargestellte Teilnehmeranschlüsse und das Koppelfeld geführt, um einen separaten Anschluß an das öffentliche oder private Kommunikationsnetz KN für ein abgesetztes Administrieren und Verwalten zu vermeiden.

Wie in Fig. 1 dargestellt, ist beim abgesetzten Kommunikationssystem KS zusätzlich ein weiterer Service-Personalcomputer SPC' - durch gestrichelte Linien angedeutet - in die Verbindung zwischen dem Modem MOD und dem Kommunikationssystem KS einfügbar. Für diesen Einsatzfall weist der weitere Service-Personalcomputer SPC eine weitere Datenschnittstelle V.24A' auf, wobei eine der beiden Datenschnittstellen V.24A, V.24A' mit dem Betriebstechnikanschluß BTS und die andere Datenschnittstelle V.24A mit dem Modem MOD verbunden ist. Über die weitere Datenschnittstelle V.24A eines Service-Personalcomputers SPC ist dieser darüberhinaus mit einem abgesetzten Kommunikationssystem KS verbindbar, dem ebenfalls im Sinne eines Fernadministrierens und Wartens ein Service-Personalcomputer SPC - zugeordnet ist.

Für den direkten Anschluß des Service-Personalcomputers SPC an ein Kommunikationssystem weist der Service-Personalcomputer SPC eine synchrone, durch eine Schnittstelleneinheit SE realisierte Datenschnittstelle V.24S auf. Diese synchrone Datenschnittstelle V.24S ist für den Anschluß an Betriebsterminalanschlüsse BTS mit synchroner Datenübertragung vorgesehen, bei denen beispielsweise eine Unixterminalemulation oder eine Unixapplikation vorgesehen ist.

Ein Service-Personalcomputer SPC weist desweiteren eine bekannte Eingabeeinrichtung EE -, beispielsweise eine Tastatur -, ein Mikroprozessorsystem MPS - beispielsweise ein Mikroprozessorsystem SAB 80 386 der Fa. Siemens - und eine Bildschirmeinrichtung BE auf.

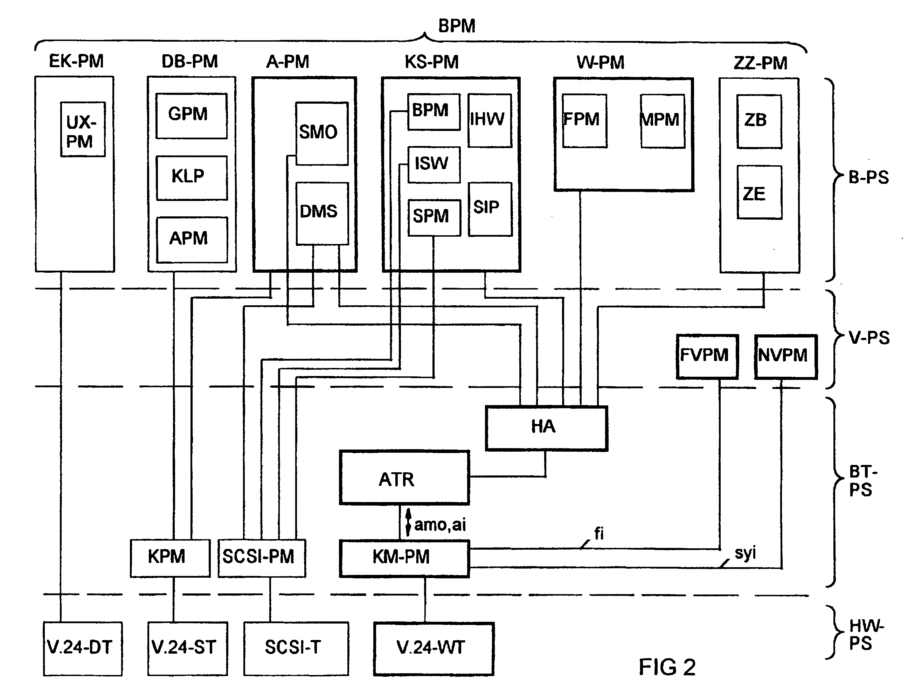

Fig. 2 zeigt die Softwarekonzeption eines in Fig. 1 dargestellten Service-Personalcomputers SPC. Das Bindeglied der Softwarestruktur zur Hardware stellt ein Personalcomputer-Betriebssystem DOS und ein fenstertechnikorientiertes Betriebssystem WIN dar - nicht dargestellt. Das Personalcomputer-Betriebssystem ist beispielsweise durch das Betriebssystem MS DOS 6.0 und das fenstertechnikforientierte Betriebssystem beispielsweise durch MS WINDOWS 3.1 realisiert.

Die Softwarestruktur ist prinzipiell in vier hirarchische Ebenen strukturiert. Dies sind im einzelnen die Benutzer-Programmstruktur B-PS, die Visualisierungs-Programmstruktur V-PS, die Betriebstechnik-Programmstruktur BT-PS und die Schaltungstechnik-Programmstruktur HW-PS.

In der Benutzer-Programmstruktur B-PS ist im Basisausbau ein Administrations-Programmodul A-PM, ein Kommunikationssystem-Programmodul KS-PM und ein Wartungs-Programmodul W-PM angeordnet. Optional ist ein Datenbasis-Programmodul DB-PM, ein weiteres Kommunikationsmodul EK-PM sowie ein Zugriffszeitpunkt-Programmodul ZZ-PM anordenbar. Die Benutzerprogrammodule BPM dieser Strukturebene B-PS sind bedieneroberflächengesteuert, d.h. die Initialisierung und Steuerung dieser Programmodule wird im wesentlichen durch Bedienereingaben bewirkt. Zusätzlich werden von einem Kommunikationssystem übermittelte, daß jeweilige Benutzerprogrammodul BPM betreffende Informationen und Meldungsinhalte mit Hilfe des jeweiligen Benutzerprogrammoduls BPM und der Bildschirmeinrichtung BE visualisiert.

Im Administrations-Programmodul A-PM werden Informatioenen bzw. Parameter für betriebstechnischen Anweisungen AMO, die für das Administrieren von Kommunikationssystemen KS vorgesehen sind, gebildet. Hierzu werden bedieneroberflächengesteuert die jeweiligen in die betriebstechnischen Anweisungen AMO einzufügenden Parameter P bzw. Informationen abgefragt und im Sinne eines Einfügens in betriebstechnische Anweisungen amo weitergeleitet. Da administrative betriebtechnische Anweisungen AMO insbesondere das Aktualisieren bzw. Ändern der Datenbasis beinhalten, werden in einem hierfür vorgesehenen Konfigurations-Verwaltungs-Programmodul DMS die diesbezüglichen Parameter P bzw. Informationen für die betriebstechnisichen Anweisungen amo bedieneroberlächengesteuert gebildet. Zur Unterstützung ist ein Support-Programmodul SMO vorgesehen, mit dessen Hilfe insbesondere eine in einem Massenspeicher MSP abgelegte Datenbasis DB über die Rechnerschnittstelle SCSI aktualisiert bzw. geändert oder gelesen wird.

Mit Hilfe des Kommunikationssystem-Programmoduls KS-PM wird das zu administrierende bzw. zu verwaltende Kommunikationssystem KS in Betrieb genommen bzw. installiert. Hierfür ist jeweils ein Installationsprogrammodul für die Installation der Hardware IHW und der Software ISW vorgesehen. Ein weiteres Shell-Programmodul SPM stellt eine graphische Personalcomputer-Betriebstechnik-Schnittstelle für das Steuern von Speichereinrichtungen zur Speicherung von Daten und Dateien dar. Dies sind insbesondere Funktionen wie Darstellen von Directories von Speichereinrichtungen der Kommunikationssysteme KS, Anzeigen des Inhalts von Dateien und Kopieren von Dateien.

Mit Hilfe eines Backup-Programmoduls BPM werden Sicherungskopien der Datenbasen DB oder Datenbasisteile der zu administrierenden bzw. zu verwaltenden Kommunikationssysteme KS erstellt und gespeichert.

Ein im Kommunikationssystem-Programmodul KS-PM implementiertes Systeminformations-Programmodul SIP visualisiert kommunikationssystemindividuelle Informationen oder steuert deren Ausgabe - z.B. an eine Druckereinrichtung. Beispielsweise sind dies Informationen über die Version und die Registriernummer eines Kommunikationssystems, der Release der implementierten Firm- oder Loadware und Angaben über die Hardware-Softwarekonfiguration des jeweiligen Kommunikationssystems KS.

Das Wartungsprogrammodul W-PM umfaßt ein Fehlerbehandlungsprogrammodul FPM und ein Maintenance-Programmodul MPM. Mit Hilfe des Maintenance-Programmoduls MPM werden Parameter P und Informationen für betriebstechnische Anweisungen amo gebildet, mit deren Hilfe die Konfiguration betreffende Abfragen, den vermittlungstechnischen Zustand betreffende Abfragen und den Start von Testprozeduren in den zu administrierenden bzw. zu verwaltenden Kommunikationssystemen KS gestartet werden. Die Konfiguration betreffende Statusabfragen sind insbesondere Anfragen über die Anzahl anschließbarer Teilnehmer, Anzahl verfügbarer Kommunikationsanschlüsse usw.. Vermittlungstechnische Abfragen stellen Abfragen über die Belegung und den vermittlungstechnischen Zustand von Kommunikationsanschlüssen, Schnittstellen und Gebührenaufzeichnungen dar.

Das optionale Datenbasis-Programmodul DB-PM weist ein zum Bilden von Datenbasen DB vorgesehenes Generierungs-Programmodul GPM, ein das Aufsammeln von Datenbasisdaten bewirkendes Kollektions-Programmodul KLP und ein eine Datenbasisaktualisierung eines Kommunikationssystems KS bewirkendes Aktualisierungs-Programmodul APM auf. Diese Programmodule GPM,KLP,APM wirken auf ein in der Betriebstechnik-Programmstruktur BT-PS angeordnetes, die synchrone Datenschnittstelle V.24S prozedural steuerndes Programmodul KPM ein, wobei über die synchrone Datenschnittstelle V.24S ausschließlich Datenbasisdaten an oder von Kommunikationssystemen KS übermittelt werden.

Die prozedurale Steuerung der weiteren asynchronen Datenschnittstelle V.24A übernimmt das externe Kommunikations-Programmoduls EK-PM. Hierfür werden für das Kommunikationssystem KS vorgesehene Terminalanschlüsse, insbesondere Betriebsterminalanschlüsse emuliert. Beispielsweise ist ein Programmodul für die Emulation eines Unixterminals UX-PM dargestellt. Für weitere Emulationen - beispielsweise die Emulation eines weiteren Betriebstechnikterminals oder einer Datenverarbeitungsanlage - sind ohne Auswirkungen auf vorhandene Programmodule weitere Programmodule in das externe Kommunikations-Programmmodul EK-PM einbindbar.

In der Visualisierungs-Programmstruktur V-PS sind für die Visualisierung der von den Kommunikationssystemen KS übermittelten Fehler - und Systemmeldungen jeweils ein Fehlervisualisierungs-Programmodul FVPM und ein Nachrichtenvisualisierungs-Programmodul NVPM vorgesehen. Mit Hilfe dieser beiden Programmodule FVPM, NVPM werden die von den Kommunikationssystemen KS übermittelten Fehler - und Systemzustandsinformationen ohne weitere Bearbeitung oder Beeinflussung direkt an der Bildschirmeinrichtung BE des Service-Personalcomputers SPC visualisiert, d.h. angezeigt. Dies ist für eine umgehende Reaktion nach einem Auftreten derartiger Meldungen erforderlich.

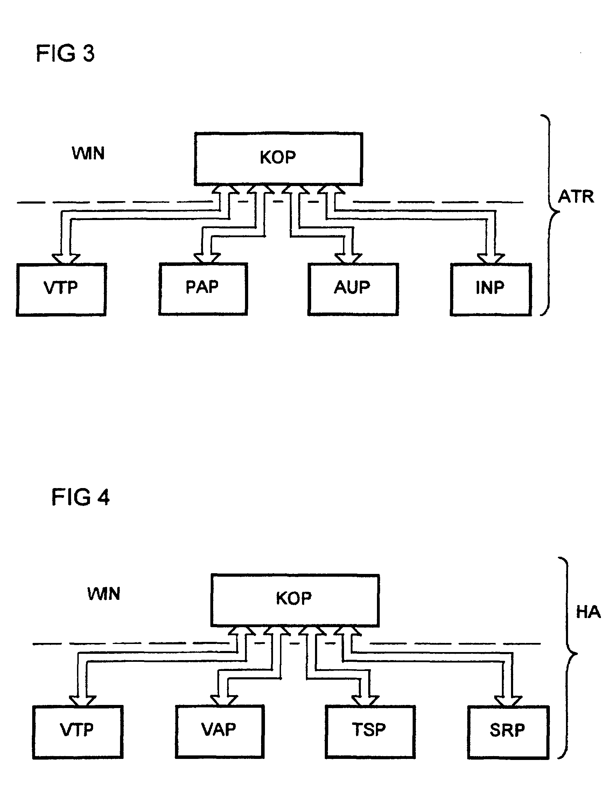

In der Betriebstechnik-Programmstruktur - BT-PS sind die den Service-Personalcomputer SPC steuernden und koordinierenden Programmodule angeordnet. Dies sind insbesondere das Anweisungs-Bearbeitungs-Programmodul ATR und das Zugriffs-Programmodul HA. Das Anweisungs-Bearbeitungs-Programmodul ATR wird in Fig. 3 und das Zugriffs-Programmodul HA in von Fig. 4 näher erläutert.

Darüberhinaus beinhaltet die Betriebstechnik-Programmstruktur BT-PS ein Rechnerschnittstellen-Programmodul SCSI-PM und ein Kommunikations-Programmodul KM-PM. Mit Hilfe des Rechnerschnittstellen-Programmoduls SCSI-PM wird die periphere Rechnerschnittstelle SCSI prozedural gesteuert, d.h. die Informationen an die jeweiligen Schnittstellenleitungen zeitgerecht gesteuert. Hierbei werden die zu übermittelnden oder empfangenen Informationen bzw. Daten von den Programmodulen in der Benutzer-Programmstruktur B-PS direkt übermittelt oder an diese weitergeleitet. Die betroffenen Programmodule DMS, ISW, BPM, SPM sind durch Verbindungen zwischen dem Rechner-Programmodul SCSI-PM und den jeweiligen Programmodulen DMS, ISW, BPM, SPM angedeutet.

Mit Hilfe des Kommunikations-Programmoduls KP-PM werden die vom Anweisungs-Bearbeitungs-Programmodul ATR übermittelten bzw. an dieses zu übermittelnde Informationen ai bzw. betriebstechnischen Anweisungen amo an die asynchrone Datenschnittstelle V.24A zeitgerecht gesteuert bzw. an diese übermittelt. Desweiteren werden in diesem Kommunikations-Programmodul KM-PM die von den Kommunikationssystemen KS übermittelten Fehlerinformationen fi und Systeminformationen syi erkannt und direkt an das Fehlervisualisierungs-Programmodul FV-PM bzw. das Nachrichtenvisualisierungs-Programmodul NV-PM übermittelt - durch entsprechende Verbindungen dargestellt.

Die Schaltungstechnik-Programmstruktur HW-PS umfaßt im Basisausbau als Bindeglied zu den physikalischen Leitungen der asynchronen Datenschnittstelle V.24 einen im fenstertechnikorientierten Betriebssystem WIN realisierten asynchroner Datenschnittstellentreiber V.24-WT. Bei diesem Basisausbau ist eine asynchrone Datenschnittstelle V.24A realisiert, mit dessen Hilfe ein Service-Personalcomputer SPC lokal direkt oder über ein öffentliches oder lokales Kommunikationsnetz KN an den Betriebstechnikanschluß BTS eines Kommunikationssystems KS anschließbar ist.

Optional ist ein Rechnerschnittstellentreiber SCSI-T, ein im Personalcomputer-Betriebssystem DOS realisierter asynchroner Datenschnittstellentreiber V.24-DT und ein im Personalcomputer-Betriebsprogramm DOS realisierter synchroner Datenschnittstellentreiber V.24-ST in die Schaltungstechnik-Programmstruktur HW-PS einfügbar. Mit Hilfe dieser Schnittstellentreiber T werden die in Fig. 1 erläuterten Schnittstellen V.24A', SCSI, V.24S realisiert.

Fig. 3 zeigt die Subprogrammstruktur des Anweisungs-Bearbeitungs-Programmoduls ATR. Für die Übermittlung von Informationen ai bzw. betriebtechnischen Anweisungen amo zwischen den einzelnen Programmodulen ist ein im fenstertechnikorientierten Betriebssystem WIN implementiertes Koordinierungs-Programmodul KOP vorgesehen. Die Funktionen des Anweisungs-Bearbeitungs-Programmoduls ATR realisiert ein verteil-Programmodul VTP, ein Parameter-Programmodul PAP, ein Auswerte-Programmodul AUP und ein Interpreter-Programmodul INP. Mit Hilfe des Verteil-Programmoduls ATP werden die vom Koordinierungs-Programmodul KOP übermittelten Informationen ai bzw. betriebstechnischen Anweisungen amo dahingehend bewertet bzw. untersucht, ob die vom Koordinierungsprogrammodul KOP übermittelten Informationen bzw. betriebstechnischen Anweisungen amo an eines der drei weiteren Programmodule PAP, AUP, INP oder an ein anderes Programmodul PM im Service-Personalcomputer SPC zu übermitteln sind. Die Bewertung, d.h. die Ermittlung des Zielprogramms, wird insbesondere durch Auswerten der in der entsprechenden Meldung angegebenen Meldungsart bewirkt. Desweiteren finden Konsistenzprüfungen der übermittelten Meldungen bezüglich der in den Meldungen angegebenen Zuständen zu der Art der Meldung statt.

Mit Hilfe des Parameter-Programmoduls PAP werden die über das Koordinierungs-Programmodul KOP von den Benutzerprogrammodulen BPM übermittelten Parameter p in betriebstechnische Anweisungen amo eingefügt bzw. betriebstechnische Parameter p oder Informationen ai im Sinne einer Visualisierung durch eines der Benutzer-Programmodule BPM aus einer betriebstechnischen Anweisung amo bzw. Informationen ai entfernt und über das Koordinierungs-Programmodul KOP an das jeweilige Benutzerprogrammodul BPM übermittelt.

Das Auswerte-Programmoduls AUP überprüft und wertet von einem zu administrierenden bzw. zu verwaltenden Kommunikationssystem KS übermittelte Informationen bzw. Antwortinformationen ai aus. Diese Informationen ai stellen überwiegend eine Bestätigung bzw. eine Reaktion einer durch eine vorgehend ausgesandte betriebstechnische Anweisung amo initialisierte betriebstechnische Aktion bzw. Aktualisierung dar. Die gegebenenfalls in diesem Auswerte-Programmodul AUP ermittelten Parameter p bzw. Informatioenen ai werden mit Hilfe eines Interpreter-Programmoduls INP in eine bedienerverständliche Information umgesetzt. Dies bedeutet, daß die meist schwer verständlichen kommunikationssystemspezifischen, betriebstechnischen Parameter p und Anweisungen amo in bedienerverständliche Informationen umgesetzt und über das Koordinierungs-Programmodul KOP an das jeweilige Benutzer-Programmodul BPM übermittelt und mit dessen Hilfe visualisiert werden.

Fig. 4 zeigt die Subprogrammstruktur des Fig. 3 zeigt die Subprogrammstruktur des Zugriff-Programmoduls HA. Für die Übermittlung von Informationen ai bzw. betriebtechnischen Anweisungen amo zwischen den einzelnen Programmodulen ist ein im fenstertechnikorientierten Betriebssystem WIN implementiertes Koordinierungs-Programmodul KOP vorgesehen. Die Funktionen des Zugriff-Programmoduls HA realisiert ein Verteil-Programmodul VTP, ein Verbindungssteuerungs-Programmodul VAP, ein Transport-Programmodul TSPP und ein Schnittstellen-Programmodul SRP. Mit Hilfe des Verteil-Programmoduls VTP werden die vom Koordinierungs-Programmodul KOP übermittelten Informationen ai bzw. betriebstechnischen Anweisungen amo dahingehend bewertet bzw. untersucht, ob die vom Koordinierungsprogrammodul KOP übermittelten Informationen bzw. betriebstechnischen Anweisungen amo an eines der drei weiteren Programmodule VAP, TSP, SRP oder an ein anderes Programmodul PM im Service-Personalcomputer SPC zu übermitteln sind. Die Bewertung, d.h. die Ermittlung des Zielprogramms, wird insbesondere durch Auswerten der in der entsprechenden Meldung angegebenen Meldungsart bewirkt. Desweiteren finden Konsistenzprüfungen der übermittelten Meldungen bezüglich der in den Meldungen angegebenen Zuständen zu der Art der Meldung statt.

Mit Hilfe des Verbindungssteuerungs-Programmoduls VAP wird im Sinne des Administrierens und Wartens eine Verbindung zum angeschlossenen Kommunikationssystem KS aufgebaut, überwacht und abgebaut, wobei im Verbindungssteuerungs-Programmodul VAP insbesondere die vermittlungstechnischen Funktionen für den Verbindungsauf- und -abbau realisiert sind. Mit Hilfe des Transport-Programmoduls werden die vermittlungstechnischen und die weiteren zu übermittelnden Informationen in für den Kommunikationsaustausch mit dem angeschlossenen Kommunikationssystem KS vorgesehenen Meldungen eingefügt bzw. entnommen und an das die Schnittstelle V.24 A prozedural steuernde Schnittstellen-Programmodul SRP übermittelt bzw. von diesem empfangen.

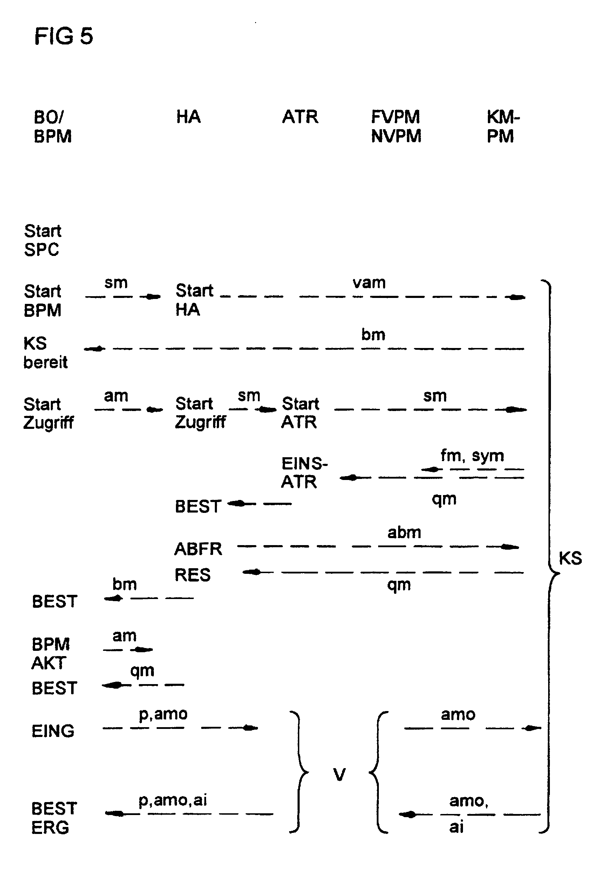

Fig. 5 zeigt in einem Meldungs-Ablaufdiagramm beispielhaft den Meldungsfluß zwischen den in den Programmstrukturen angeordneten Programmodulen in einem Service-Personalcomputer SPC, der lokal an die Betriebsschnittstelle BTS eines Kommunikationssystems KS angeschlossen ist. Im oberen Bereich von Fig. 5 sind Programmodule angegeben, denen jeweils die darunterliegende Spalte zugeordnet ist. Die erste Spalte ist der Benutzeroberfläche BO der jeweiligen in der Benutzer-Programmstruktur B-PS angeordneten Benutzer-Programmodule BPM zugeordnet. Desweiteren ist jeweils eine Spalte für das Zugriffs-Programmodul HA, das Anweisungs-Bearbeitungs-Programmmodul ATR, das Kommunikations-Programmodul KM-PM und für das Fehlervisualisierungs-Programmodul FV-PM und das Nachrichtenvisualisierungs-Programmodul NV-PM vorgesehen. Nach der Inbetriebnahme eines Service-Personalcomputers SPC wird beispielsweise auf dessen graphischer Oberfläche eine Gruppe von aufrufbaren Programmen bzw. Funktionen angezeigt. Bei der graphischen Oberfläche eines fenstertechnikorientierten Betriebssystem WIN werden die einzelnen Programme bzw. Funktionen durch Icon graphisch dargestellt, wobei die Funktionen des Service-Personalcomputers SPC durch anklicken eines die Service-Personalcomputer-Funktionen repräsentierenden Icon aufgerufen werden. Dieser Aufruf ist in Fig. 5 durch die Bezeichnung "Start SPC" angegeben. Daraufhin werden auf der graphischen Oberfläche des fenstertechnikorientierten Betriebssystems WIN aufrufbare Benutzer-Programmodule BPM der Benutzer-Programmstruktur B-PS beispielsweise durch Icons dargestellt. Der Start eines der Benutzer-Programmodule BPM wird ebenfalls durch Anklicken des entsprechenden Icons bewirkt und ist in Fig. 5 durch Angabe der Information "Start BPM" dargestellt. Durch das jeweilige Benutzerprogrammodul BPM wird eine Startmeldung sm an das Zugriffs-Programmodul HA übermittelt, worauf dieses gestartet wird - siehe Fig. 5 Angabe "Start HA". Mit Hilfe des Zugriffs-Programmoduls HA wird automatisch eine Verbindungsaufbaumeldung vam gebildet und über das aktivierte Anweisungs-Bearbeitungs-Programmodul ATR und das Kommunikations-Programmodul KM-PM an das angeschlossene Kommunikationssystem KS übermittelt. Vom Kommunikationssystem KS wird über die beiden vorhergehend angegebenen Programmodule ATR, KM-PM eine Bestätigungsmeldung bm übermittelt und an der Oberfläche BO des aktuell gestarteten Benutzer-Programmoduls BPM angezeigt. Die Anzeige ist durch die Angabe "KS bereit" angedeutet. Durch diese Angabe ist lediglich die Bereitschaft für eine Informationsübermittlung des Kommunikationssystems KS bestätigt.

Anschließend wird durch eine entsprechende Eingabe - siehe Fig. 5 die Angabe "Start Zugriff" - der betriebstechnische Zugriff zu dem zu administrierenden bzw. verwaltenden Kommunikationssystem KS gestartet. Hierzu wird im jeweiligen Benutzer-Programmodul BPM eine Anmeldemeldung am gebildet und an das Zugriffs-Programmodul HA transferiert. In diesem werden die entsprechenden Zugriffsroutinen gestartet und eine Startmeldung sm gebildet, die an das Anweisungs-Bearbeitungs-Programmodul ATR und an das Kommunikationssystem KS weitergeleitet wird. Die Startmeldung SM bewirkt das Starten des Anweisungs-Bearbeitungs-Programmodul ATR - siehe Fig. 5 "Start ATR". Analog hierzu werden im Kommunikationssysstem KS gegebenenfalls vorliegende Fehlermeldungen oder Systemmeldungen fm, sym automatisch abgefragt und an das Fehlervisualisierungs- und Nachrichtenvisualisierungs-Programmodul FV-PM, NV-PM im Sinne einer Visualisierung an der Benutzeroberfläche BO des Service-Personalcomputers SPC übermittelt. Parallel hierzu werden die Informationen über die Kommunikationssprache, die Art, den Typ und den Ausbaugrad automatisch abgefragt, in eine Quittierungsmeldung qm eingefügt und an das Anweisungs-Bearbeitungs-Programmodul ATR transferiert. Aufgrund dieser Mitteilung werden im Anweisungs-Bearbeitungs-Programmodul ATR entsprechende Einstellungen - siehe in Fig. 5 "EINS-ATR" - vorgenommen. Die Einstellungen beziehen sich insbesondere auf eine zu verwendende Kommunikationssprache, die aktuell verwendbaren betriebstechnischen Anweisungen amo und auf die Ausprägungen der kommunikationssystemindividuellen Stapel von betriebstechnischen Anweisungen amo. Weitere Informationen, die für die Einstellung des Anweisungs-Bearbeitungs-Programmmoduls ATR erforderlich sind, werden durch entsprechende Abfragemeldungen abm und Quittierungsmeldungen qm abgefragt. Das Bilden und Bewerten dieser Meldungen ABM, QM ist in Fig. 4 durch die Bezeichnungen ABFR und RES angedeutet.

Nach der Einstellung des Anweisungs-Bearbeitungs-Programmoduls HA bildet dieses eine Bestätigungsmeldung bm und übermittelt diese an das aktuell aktivierte Benutzerprogrammodul BPM und wird dort angezeigt - siehe Fig.5 "BEST". Nach dieser Bestätigung, die die Zugriffsbereitschaft des Kommunikationssystems KS anzeigt, kann durch eine entsprechende Eingabe - siehe Fig. 5 "BPM AKT" - der Ablauf des Benutzerprogrammoduls BPM - beispielsweise des Administration-Programmodul A-PM - aktiviert werden. Im Rahmen der Aktivierung wird eine Anmeldemeldung am gebildet und an das Zugriffs-Programmmodul HA übermittelt. In diesem wird festgestellt, ob eine Bearbeitung des Benutzer-Programmoduls BPM durch das Anweisungs-Bearbeitungs-Programmoduls ATR bzw. das Kommunikations-Programmodul KM-PM möglich ist, und in Abhängigkeit von dem Feststellungsergebnis eine Quittierungsmeldung qm an das Benutzer-Programmodul BPM bzw. dessen Oberfläche BO übermittelt - siehe Fig. 5 "BEST ". Bei positiver Bestätigung werden entsprechend dem aktivierten Benutzer-Programmodul BPM über dessen Bedieneroberfläche BO Parameter p oder betriebstechnische Anweisungen amo eingegeben oder in diesem Benutzer-Programmodul BPM gebildet - siehe Fig. 5 "EING" - oder abgerufen und über das Zugriffs-Programmodul HA an die Anweisungs-Bearbeitungs-Programmodul ATR übermittelt. In diesem Anweisungs-Bearbeitungs-Programmodul ATR findet das Einfügen der im aktualisiertem Benutzer-Programmodul BPM abgefragten bzw. gebildeten Parameter p in betriebstechnische Anweisungen amo statt. Gespeicherte oder gebildete einzelne betriebstechnische Anweisungen amo oder von den Benutzer-Programmodulen BPM übermittelte betriebstechnischen Anweisungen amo oder Stapel derartiger betriebstechnischer Anweisungen amo werden sukzessive abgearbeitet. Dies bedeutet, daß betriebstechnische Anweisung AMO für betriebstechnische Anweisung amo zukzessive an das zu administrierende bzw. zu verwaltende Kommunikationssystem KS ausgesandt wird, dort die entsprechende administrativen oder verwaltungstechnischen Aktion durchgeführt und die Ausführungsergebnisse durch weitere betriebstechnische Anweisungen amo oder durch Antwortinformationen bzw. Informationen ai an den Service-Personalcomputer SPC zurückgesandt werden. Das Anweisungs-Bearbeitungs-Programmodul ATR umfaßt eine Bewertung der empfangenen betriebstechnischen Anweisungen amo bzw. Antwortinformationen ai und leitet eine Visualisierung - siehe Fig. 5 "BEST ERG" - sowie entsprechende Reaktionen ein, die in Abhängigkeit von dem aktivierten Benutzer-Programmodul BPM über die jeweilige Bedieneroberfläche BO gesteuert werden. Die jeweiligen Varianten der Bearbeitung von betriebstechnischen Anweisungen amo bzw. Informationen im Anweisungs-Bearbeitungs-Programmodul ATR sind in Fig. 5 durch die Bezeichnung VA angegeben. Als Reaktion ist für eine komfortable Bedienung des Service-Personalcomputers SPC ein automatisches Aufrufen und ggfs. Bilden einer betriebstechnischen Anweisung amo vorgesehen, nach deren Übermittlung und Ausführung in dem jeweiligen Kommunikationssystem KS ein vorhergehend ablaufender bedieneroberflächengesteuerter Betrieb durch die Benutzerprogrammodule BPM weitergeführt wird. Etwaige erforderliche, nicht automatisch ermittelbare Parameter p sind ggfs. durch oberflächengesteuerte Eingaben mit Hilfe des relevanten, automatisch aktivierten Benutzer-Programmoduls BPM abrufbar.

Der Service-Personalcomputer SPC stellt ein mobiles Betriebstechnikterminal dar, das bei maximalem Bedienkomfort ein lokales und ferngesteuertes Administrieren und Warten von unterschiedlichen Kommunikationssysteme KS mit unterschiedlichen Ausbauvarianten ermöglicht. Dies bedeutet eine erhebliche Reduzierung der erforderlichen Betriebsterminaltypen und sichert durch seine modulare Systemkonzeption eine flexible Anpassung hinsichtlich der Administrierung bzw. Verwaltung für zukünftige Kommunikationssysteme KS.

## Patentansprüche

1. Service-Personalcomputer (SPC) mit mindestens einer asynchronen Kommunikationsschnittstelle (V.24) und einem Personalcomputer-Beriebssystem (DOS) sowie einem fenstertechnikorientierten Betriebssystem (WIN), wobei der Service-Personalcomputer (SPC) im Sinne eines Administrierens und Wartens von Kommunikationssystemen (KS) mit diesen lokal oder abgesetzt verbindbar ist und die Kommunikationssysteme (KS) durch betriebstechnische Parameter (p) enthaltende betriebstechnische Anweisungen (amo) administriert und gewartet werden,
- mit einer durch bedieneroberflächen-initialisierbare und
- steuerbare, betriebstechnische Parameter (p) sowie betriebstechnische Anweisungen (amo) generierende und visualisierende sowie die Kommunikation zu und von einem Kommunikationssystem (KS) initialisierende und steuernde Benutzer-Programmodule (BPM) gebildeten Benutzer-Programmstruktur (B-PS),
- mit einer durch Programmodule (FVPM,NVPM) zur Anzeige von durch die Kommunikationssysteme (KS) übermittelten Fehlerund Systemnachrichten gebildeten Visualisierungs-Programmstruktur (V-PS),
- mit einer Betriebstechnik-Programmstruktur (BT-PS), in der
-- ein Anweisungs-Bearbeitungs-Programmodul (ATR) derart ausgestaltet ist,
--- daß von den Benutzer-Programmodulen (BPM) übermittelte betriebstechnische Parameter (p) in betriebstechnische Anweisungen (amo) einfügbar und aus den von den Kommunikationssystemen (KS) übermittelten betriebstechnischen Anweisungen (amo) betriebstechnischen Parameter (p) und Informationen (ai) lesbar sind und zur Steuerung von Benutzer-Programm-module (BPM) verwendet werden,

2. Service-Personalcomputer nach Anspruch 1,
**dadurch gekennzeichnet,**
**daß** das Anweisungs-Bearbeitungs-Programmodul (ATR) derart ausgestaltet ist, daß zu kommunikationssystemindividuellen, aufgabenbezogenen Stapeln zusammengefaßte betriebstechnische Anweisungen (amo) sukzessiv zu einem Kommunikationssystem (KS) übermittelt werden.

3. Service-Personalcomputer (SPC) nach Anspruch 1 oder 2,
**dadurch gekennzeichnet,**
**daß** zumindest ein Benutzer-Programmodul (BPM) derart ausgestaltet ist, daß bedieneroberflächengesteuert mit betriebstechnischen Parametern (p) versehene betriebstechnische Anweisungen (amo) oder aufgabenbezogene Stapel von betriebstechnische Anweisungen (amo) gebildet und im Sinne eines Weiterleitens an ein Kommunikationssystem (KS) an das Anweisungs-Bearbeitungs-Programmodul (ATR) übergeben werden.
--- **daß** die Übermittlung jeder betriebstechnischen Anweisung (amo) zu und von einem Kommunikationssystem (KS) gesteuert und überwacht wird, und
--- **daß** eine als Reaktion auf eine ausgesandte betriebstechnische Anweisung (amo) von einem Kommunikationssystem (KS) empfangene betriebstechnische Information (amo,ai) bewertet und eine dem Informationsinhalt entsprechende betriebstechnische Reaktion eingeleitet wird,
-- ein die Kommunikation mit dem Kommunikationssystem (KS) über die Kommunikationsschnittstelle (V.24A) steuerndes und überwachendes Zugriffs-Programmodul (HA) und
-- ein eine im fenstertechnikorientierten Betriebssystem (WIN) realisierte Kommunikationsschnittstelle (V.24A) prozedural steuerndes Kommunikationsschnittstellen-Programmodul (KM-PM) angeordnet ist, und
- mit einer zumindest einen im fenstertechnikorientierten Betriebssystem (WIN) oder Personalcomputer-Betriebssystem (DOS) realisierten, asynchronen Kommunikationsschnittstellentreiber (V.24A) aufweisende Schaltungstechnik-Programmstruktur (HW-PS).

4. Service-Personalcomputer nach einem der Ansprüche 1 bis 3,
**dadurch gekennzeichnet,**
**daß** in der Benutzer-Programmstruktur (B-PS)
- ein das bedieneroberflächengesteuerte Abfragen von betriebstechnischen Parametern (p) für administrative Funktionen in den Kommunikationssystemen (KS) bewirkendes, betriebstechnische Anweisungen (amo) realisierendes Administrations-Programmodul (A-PM),
- ein das bedieneroberflächengesteuerte Abfragen von betriebstechnischen Parametern (p) für Wartungsfunktionen in den Kommunikationssystemen (KS) bewirkendes, betriebstechnische Anweisungen (amo) realisierendes Wartungs-Programmodul (W-PM), und
- ein das bedieneroberflächengesteuerte Abfragen von betriebstechnischen Parametern (p) für die Kommunikationssystemressourcen inbetriebnehmendes, Kommunikationssystemdaten sicherndes sowie Kommunikationssystem-Datenspeicher (MSP) und Dateien beeinflussendes, betriebstechnische Anweisungen (amo) realisierendes Kommunikationssystem-Programmmodul (KS-PM)
vorgesehen ist.

5. Service-Personalcomputer nach Anspruch 4,
**dadurch gekennzeichnet,**
**daß** in die Benutzer-Programmstruktur (B-PS) zusätzlich ein eine Datenbasis (DB) eines Kommunikationssystems (KS) generierendes oder aktualisierendes oder Datenbasisdaten sammelndes Datenbasis-Programmodul (DB-PM) einfügbar ist.

6. Service-Personalcomputer nach einem der Ansprüche 4 oder 5,
**dadurch gekennzeichnet,**
**daß** in die Benutzer-Programmstruktur (B-PS) zusätzlich ein eine weitere externe Kommunikationsschnittstelle (V.24A') für die Kopplung von Service-Personalcomputern (SPC) und für den Anschluß von Datenverarbeitungsanlagen steuerndes externes Kommunikations-Programmodul (EK-PM) vorgesehen ist.

7. Service-Personalcomputer nach einem der Ansprüche 4 bis 6,
**dadurch gekennzeichnet,**
**daß** in die Benutzer-Programmstruktur (B-PS) ein Bedienerhilfsinformationen visualisierendes Hilfe-Programmodul (H-PM) eingefügt ist.

8. Service-Personalcomputer nach einem der vorhergehenden Ansprüche,
**dadurch gekennzeichnet,**
**daß** in der Betriebstechnik-Programmstruktur (BT-PS) zusätzlich ein eine zusätzliche periphere Rechnerschnittstelle (SCSI) prozedural steuerndes Rechnerschnittstellen-Programmodul (SCSI-PM) vorgesehen ist.

9. Service-Personalcomputer nach einem der vorhergehenden Ansprüche,
**dadurch gekennzeichnet,**
**daß** in der Betriebstechnik-Programmstruktur (BT-PS) zusätzlich ein im Personalcomputer-Betriebssystem (DOS) realisiertes, eine synchrone Kommunikationsschnittstelle (V.24S) prozedural steuerndes Kommunikations-Programmodul (KPM) vorgesehen ist.

10. Service-Personalcomputer nach einem der vorhergehenden Ansprüche,
**dadurch gekennzeichnet,**
**daß** in der Schaltungstechnik-Programmstruktur (HW-ST) zusätzlich ein im Personalcomputer-Betriebssystem (DOS) realisierter, synchroner Kommunikationsschnittstellentreiber (V.24-ST) vorgesehen ist.

11. Service-Personalcomputer nach einem der vorhergehenden Ansprüche,
**dadurch gekennzeichnet,**
**daß** in der Schaltungstechnik-Programmstruktur (HW-ST) zusätzlich ein im Personalcomputer-Betriebssystem realisierter Rechnerschnittstellentreiber (SCSI-T) vorgesehen ist.

12. Service-Personalcomputer nach einem der vorhergehenden Ansprüche,
**dadurch gekennzeichnet,**
**daß** die zumindest eine asynchrone Kommunikationsschnittstelle (V.24) im fenstertechnikorientierten Betriebssystem (WIN) und eine weitere asynchrone Kommunikationsschnittstelle (V.24') im Personalcomputer-Betriebssystem (DOS) realisiert ist.

13. Service-Personalcomputer nach einem der vorhergehenden Ansprüche,
**dadurch gekennzeichnet,**
**daß** der Service-Personalcomputer (SPC) mit einer Rechnerschnittstelle (SCSI) für den Anschluß von peripheren Personalcomputer-Einrichtungen (MSP) ausgestattet ist.

14. Service-Personalcomputer nach einem der vorhergehenden Ansprüche,
**dadurch gekennzeichnet,**
**daß** der Service-Personalcomputer (SPC) mit einer weiteren synchronen Kommunikationsschnittstelle (V.24S) für die Übermittlung von Massendaten von und zu den Kommunikationssystemen (KS) ausgestattet ist.

## Claims

1. Service personal computer (SPC) having at least one asynchronous communication interface (V.24) and a personal computer operating system (DOS) and also a Windows-based operating system (WIN), where, for the purposes of administering and maintaining communication systems (KS), the service personal computer (SPC) can be connected to the latter locally or remotely, and the communication systems (KS) are administered and maintained by operational instructions (amo) containing operational parameters (p),
- having a user program structure (B-PS) formed by user program modules (BPM) which can be initialized and controlled by user interface, which generate and visualize operational parameter (p) and operational instructions (amo) and which initialize and control the communication with and from a communication system (KS),
- having a visualization program structure (V-PS) formed by program modules (FVPM, NVPM) for displaying error and system messages transmitted by the communication systems (KS),
- having an operating program structure (BT-PS), in which
-- an instruction processing program module (ATR) is designed such
--- that operational parameters (p) transmitted by the user program modules (BPM) can be inserted into operational instructions (amo), and operational parameters (p) and information (ai) can be read from the operational instructions (amo) transmitted by the communication systems (KS) and can be used for controlling user program modules (BPM),
--- that the transmission of every operational instruction (amo) to and from a communication system (KS) is controlled and monitored, and
--- that an operational information item (amo, ai) received from a communication system (KS) in response to a transmitted operational instruction (amo) is assessed, and an operational response corresponding to the information content is initiated,
-- an access program module (HA) controlling and monitoring the communication with the communication system (KS) via the communication interface (V.24A) and
-- a communication interface program module (KM-PM) procedurally controlling a communication interface (V.24A) produced in the Windows-based operating system (WIN) is arranged, and
- having a circuitry program structure (HW-PS) which has at least one asynchronous communication interface driver (V.24A) produced in the Windows-based operating system (WIN) or personal computer operating system (DOS).

2. Service personal computer according to Claim 1,
**characterized**
**in that** the instruction processing program module (ATR) is designed such that operational instructions (amo) combined to form task-related stacks specific to communication systems are progressively transmitted to a communication system (KS).

3. Service personal computer (SPC) according to Claim 1 or 2,
**characterized**
**in that** at least one user program module (BPM) is designed such that, under user-interface control, operational instructions (amo) provided with operational parameters (p) or task-related stacks of operational instructions (amo) are formed and are transferred to the instruction processing program module (ATR) for the purposes of forwarding to a communication system (KS).

4. Service personal computer according to one of Claims 1 to 3,
**characterized**
**in that** the user program structure (B-PS) is provided with
- an administration program module (A-PM) which effects the user-interface-controlled requesting of operational parameters (p) for administrative functions in the communication systems (KS) and produces operational instructions (amo),
- a maintenance program module (W-PM) which effects the user-interface-controlled requesting of operational parameters (p) for maintenance functions in the communication systems (KS) and produces operational instructions (amo), and
- a communication system program module (KS-PM) which starts up the user-interface-controlled requesting of operational parameters (p) for the communication system resources, protects communication system data and also influences communication system data memories (MSP) and files and produces operational instructions (amo).

5. Service personal computer according to Claim 4,
**characterized**
**in that** a database program module (DB-PM) which generates or updates a database (DB) for a communication system (KS) or which collects database data can additionally be inserted into the user program structure (B-PS).

6. Service personal computer according to one of Claims 4 or 5,
**characterized**
**in that** an external communication program module (EK-PM) which controls a further external communication interface (V.24A') for coupling service personal computers (SPC) and for connecting data processing installations is additionally provided in the user program structure (B-PS).

7. Service personal computer according to one of Claims 4 to 6,
**characterized**
**in that** an auxiliary program module (H-PM) visualizing user auxiliary information is inserted into the user program structure (B-PS).

8. Service personal computer according to one of the preceding claims,
**characterized**
**in that** a computer interface program module (SCSI-PM) procedurally controlling an additional peripheral computer interface (SCSI) is additionally provided in the operating program structure (BT-PS).

9. Service personal computer according to one of the preceding claims,
**characterized**
**in that** a communication program module (KPM) which is implemented in the personal computer operating system (DOS) and procedurally controls a synchronous communication interface (V.24S) is additionally provided in the operating program structure (BT-PS).

10. Service personal computer according to one of the preceding claims,
**characterized**
**in that** a synchronous communication interface driver (V.24-ST) implemented in the personal computer operating system (DOS) is additionally provided in the circuitry program structure (HW-ST).

11. Service personal computer according to one of the preceding claims,
**characterized**
**in that** a computer interface driver (SCSI-T) produced in the personal computer operating system is additionally provided in the circuitry program structure (HW-ST).

12. Service personal computer according to one of the preceding claims,
**characterized**
**in that** the at least one asynchronous communication interface (V.24) is implemented in the Windows-based operating system (WIN), and a further asynchronous communication interface (V.24') is implemented in the personal computer operating system (DOS).

13. Service personal computer according to one the preceding claims,
**characterized**
**in that** the service personal computer (SPC) is equipped with a computer interface (SCSI) for connecting peripheral personal computer devices (MSP).

14. Service personal computer according to one of the preceding claims,
**characterized**
**in that** the service personal computer (SPC) is equipped with a further synchronous communication interface (V.24S) for transmitting mass data from and to the communication systems (KS).

## Revendications

1. Ordinateur personnel de service (SPC) avec au moins une interface de communication asynchrone (V.24) et un système d'exploitation pour PC (DOS) ainsi qu'un système d'exploitation reposant sur la technique de fenêtrage (WIN), ledit ordinateur personnel de service (SPC), dans le sens d'une administration et d'un entretien de systèmes de communication, pouvant être connecté à ceux-ci, localement ou à distance, et les systèmes de communication (KS) étant administrés et entretenus par des instructions de service (amo) contenant des paramètres de service (p),
- avec une structure de programme utilisateur (B-PS) formée par des paramètres de service (p) initialisables et commandables par une interface utilisateur ainsi que des modules de programme utilisateur (BPM) générant et visualisant des instructions de service (amo) et initialisant et commandant la communication vers et depuis un système de communication (KS),
- avec une structure de programme de visualisation (V-PS) formée par des modules de programme (FVPM, NVPM) pour afficher des messages d'erreur et de système transmis par les systèmes de communication (KS),
- avec une structure de programme de service (BT-PS), dans laquelle
-- un module de programme de traitement d'instructions (ATR) est réalisé de manière
--- à pouvoir insérer des paramètres de service (p) transmis par les modules de programme utilisateur (BPM) dans des instructions de service (amo) et à pouvoir extraire des instructions de service (amo) transmises par les systèmes de communication (KS) des paramètres de service (p) et des informations et à utiliser ceux-ci pour commander des modules de programme utilisateur (BPM),
--- à commander et surveiller la transmission de chaque instruction de service (amo) vers et depuis un système de communication (KS), et
--- à évaluer une information de service (amo, ai) reçue par un système de communication (KS) en réaction à une instruction de service (amo) envoyée et à déclencher une réaction de service correspondant au contenu de l'information,
-- un module de programme d'accès (HA) commandant et surveillant la communication avec le système de communication (KS) par l'intermédiaire de l'interface de communication (V.24A), et
-- un module de programme d'interface de communication (KM-PM) commandant par procédures une interface de communication (V.24A) réalisée dans le système d'exploitation reposant sur la technique de fenêtrage (WIN) est implémenté, et
- avec une structure de programme de circuit (HW-PS) comprenant au moins un pilote d'interface de communication asynchrone (V.24A) réalisé dans le système de communication reposant sur la technique de fenêtrage (WIN) ou le système d'exploitation pour PC (DOS).

2. Ordinateur personnel de service selon la revendication 1, **caractérisé en ce que** le module de programme de traitement d'instructions (ATR) est réalisé de manière à transmettre des instructions de service (amo) regroupées en piles séparées pour chaque système de communication et spécifiques à une tâche, successivement à un système de communication (KS).

3. Ordinateur personnel de service (SPC) selon la revendication 1 ou 2, **caractérisé en ce qu'**au moins un module de programme utilisateur (BPM) est réalisé de manière à former par commande de l'interface utilisateur des instructions de service (amo) pourvues de paramètres de service (p) ou des piles spécifiques à une tâche contenant des instructions de service (amo) et à les transmettre, dans le sens d'un transfert à un système de communication (KS), au module de programme de traitement d'instructions (ATR).

4. Ordinateur personnel de service selon l'une des revendications 1 à 3, **caractérisé en ce que** la structure de programme utilisateur (B-PS) comporte
- un module de programme d'administration (A-PM) permettant d'interroger des paramètres de service (p) pour des fonctions administratives dans les systèmes de communication (KS) par commande de l'interface utilisateur et créant des instructions de service (amo),
- un module de programme d'entretien (W-PM) permettant d'interroger des paramètres de service (p) pour des fonctions d'entretien dans les systèmes de communication (KS) par commande de l'interface utilisateur et créant des instructions de service (amo), et
- un module de programme de systèmes de communication (KS-PM) mettant en oeuvre l'interrogation de paramètres de service (p) pour les ressources des systèmes de communication par commande de l'interface utilisateur, sécurisant les données des systèmes de communication et agissant sur les mémoires de données des systèmes de communication (MSP) et les fichiers, et créant des instructions de service (amo).

5. Ordinateur personnel de service selon la revendication 4, **caractérisé en ce que** la structure de programme utilisateur (B-PS) peut contenir en outre un module de programme de base de données (DB-PM) générant ou mettant à jour une base de données (DB) d'un système de communication (KS) ou collectant des données pour ladite base de données.

6. Ordinateur personnel de service selon l'une des revendications 4 ou 5, **caractérisé en ce que** la structure de programme utilisateur (B-PS) comporte en outre un module de programme de communication externe (EK-PM) commandant une autre interface de communication externe (V.24A') pour coupler des ordinateurs personnels de service (SPC) et pour connecter des équipements de traitement de données.

7. Ordinateur personnel de service selon l'une des revendications 4 à 6, **caractérisé en ce que** la structure de programme utilisateur (B-PS) contient un module de programme d'aide (H-PM) visualisant des informations auxiliaires pour l'utilisateur.

8. Ordinateur personnel de service selon l'une des revendications précédentes, **caractérisé en ce que** la structure de programme de service (BT-PS) comporte en outre un module de programme d'interface d'ordinateur (SCSI-PM) commandant par procédures une interface d'ordinateur (SCSI) périphérique supplémentaire.

9. Ordinateur personnel de service selon l'une des revendications précédentes, **caractérisé en ce que** la structure de programme de service (BT-PS) comporte en outre un module de programme de communication (KPM) réalisé dans le système d'exploitation pour PC (DOS) et commandant par procédures une interface de communication synchrone (V.24S).

10. Ordinateur personnel de service selon l'une des revendications précédentes, **caractérisé en ce que** la structure de programme de circuit (HW-ST) comporte en outre un pilote d'interface de communication synchrone (V.24-ST) réalisé dans le système d'exploitation pour PC (DOS).

11. Ordinateur personnel de service selon l'une des revendications précédentes, **caractérisé en ce que** la structure de programme de circuit (HW-ST) comporte en outre un pilote d'interface d'ordinateur (SCSI-T) réalisé dans le système d'exploitation pour PC.

12. Ordinateur personnel de service selon l'une des revendications précédentes, **caractérisé en ce que** ladite au moins une interface de communication asynchrone (V.24) est réalisée dans le système d'exploitation reposant sur la technique de fenêtrage (WIN) et une autre interface de communication asynchrone (V.24') dans le système d'exploitation pour PC (DOS).

13. Ordinateur personnel de service selon l'une des revendications précédentes, **caractérisé en ce que** l'ordinateur personnel de service (SPC) est équipé d'une interface d'ordinateur (SCSI) pour raccorder des équipements informatiques périphériques (MSP).

14. Ordinateur personnel de service selon l'une des revendications précédentes, **caractérisé en ce que** l'ordinateur personnel de service (SPC) est équipé d'une autre interface de communication synchrone (V.24S) pour transmettre des données en masse depuis et vers les systèmes de communication (KS).
